# EUROPÄISCHE PATENTSCHRIFT

(11) **EP 3 573 862 B1**
(45) Veröffentlichungstag und Bekanntmachung des Hinweises auf die Patenterteilung: **19.08.2020**
(21) Anmeldenummer: 17801345.4
(22) Anmeldetag: 15.11.2017
(51) Int. Cl.: B60R 7/04

(54) **KRAFTFAHRZEUG**
MOTOR VEHICLE
AUTOMOBILE

(30) Priorität: 25.01.2017 DE 102017000637
(43) Veröffentlichungstag der Anmeldung: 04.12.2019
(73) Patentinhaber: Audi AG, 85045 Ingolstadt (DE)
(72) Erfinder: HORNISCHER, Jörg, 85139 Wettstetten (DE); ENSLINGER, Bernhard, 92318 Neumarkt i.d. OPf (DE)
(86) Internationale Anmeldenummer: PCT/EP2017/001335
(87) Internationale Veröffentlichungsnummer: WO 2018/137749

(56) Entgegenhaltungen:
- DE-A1-102005 060 974
- DE-A1-102011 079 653
- JP-A- 2009 154 552
- US-A1- 2010 090 491

## Beschreibung

Die Erfindung betrifft ein Kraftfahrzeug mit wenigstens zwei Sitzen und einem sich im Fußraum vor den Sitzen befindlichen Ablagefach, welches einen Boden, eine Vorderwand, eine Rückwand und zwei Seitenwände umfasst, wobei jede Seitenwand des Ablagefachs zwischen einer das Ablagefach seitlich öffnenden, abgesenkten Position und einer das Ablagefach seitlich schließenden, angehobenen Position bewegbar ist.

Die Mittelkonsole bei Kraftfahrzeugen ist eine praktische Ablagemöglichkeit für diverse Gegenstände. Ein Entfall der Mittelkonsole, wie beispielsweise bei Fahrzeugen ohne Mitteltunnel wie Fahrzeugen mit Elektroantrieb, schafft einerseits zwar ein größeres Raumgefühl, andererseits fehlt jedoch eine der wichtigsten Ablagemöglichkeiten im Fahrzeuginneren. Um bei solchen Fahrzeugen dennoch eine Ablagemöglichkeit zu schaffen, sind mitunter zwei sehr niedrige Seitenwände, die ein Ablagefach seitlich begrenzen, vorgesehen. Bei derart niedrigen Seitenwänden besteht jedoch die Gefahr, dass während der Fahrt Gegenstände, die in dem Ablagefach abgelegt worden sind, aus diesem hinausfallen. Das Fallen von Gegenständen in den Fußraum des Fahrers kann die Sicherheit erheblich beeinträchtigen. Um ein solches Hinausfallen zu vermeiden, besteht die Möglichkeit, die Ablageflächen mit entsprechenden Deckeln zu versehen. Dies wirkt aber dem durch eine flache, seitlich nicht oder nur in geringer Höhe begrenzte und nach oben offene Ablagefläche entstehenden Raumgefühl entgegen.

In DE 10 2015 002 758 A1 ist eine Jalousie zum Verschließen eines Ablageflachs in einer Mittelkonsole eines Kraftwagens beschrieben. Die Jalousie ist dabei so ausgeführt, dass ihre Lamellen in geschlossener Stellung die seitlichen Führungen, in denen die Jalousie geführt wird, überdecken.

DE 11 2014 004 692 T5 beschreibt einen Behälter, der z. B. für einen Mittelkonsolenkasten eines Fahrzeugs verwendet wird. Dabei sind unter anderem die Bodenwand und die Seitenwände einstückig als Einzelbauteil ausgebildet und damit über einstückige Scharniere verbunden. Der Behälter ist so gestaltet, dass er im aufgeklappten Zustand bei seitlich oder von oben auf den Behälter einwirkenden Kräften eine Belastung des einstückigen Scharniers vermeidet.

Die Druckschrift GB 2508430 A offenbart einen Behälter für die Mittelkonsole eines Kraftfahrzeugs, der aus einem unteren und einem oberen Behälterteil besteht, wobei die Gesamthöhe des Behälters durch ein Verschieben der beiden Behälterteile zueinander eingestellt werden kann. Zusätzlich weist der obere Teil eine verschiebbare Abdeckung auf.

US 6 116 674 offenbart einen Behälter, der an verschiedenen Stellen innerhalb eines Kraftfahrzeugs angeordnet werden kann und der an den Halterungen der Fahrzeugsitze befestigbar ist. Der Behälter weist dabei starre Seitenwände sowie einen klappbaren Deckel und in seinem Vorderbereich eine durch eine Jalousie verschließbare Öffnung auf.

In US 2016/0 059 790 A1 ist eine Matte für den Boden eines Kofferraums in einem Kraftfahrzeug beschrieben, wobei die Matte so gestaltet ist, dass sie mehrere ausklappbare Flächen aufweist, die zusammen im aufgerichteten Zustand einen Behälter im Kofferraum ergeben. Außerdem offenbart die Druckschrift entsprechende aufrichtbare Behälter auch für andere Positionen im Kraftfahrzeug, wie z.B. die Fußräume vor den Sitzen des Kraftfahrzeugs.

Aus US 2010/0 090 491 A1 ist ein Ablagefach für ein Kraftfahrzeug.nach dem Oberbegriff des Anspruchs bekannt, welches in einer Mittelkonsole eines Kraftfahrzeugs angeordnet ist und zwei Rolltüren umfasst. Die Rolltüren sind jeweils bewegbar und können dabei eine Seitenwand des Ablagefachs abdecken.

Der Erfindung liegt das Problem zugrunde, ein Kraftfahrzeug anzugeben, dass sowohl ein offenes Raumgefühl bietet als auch über eine geeignete Ablagemöglichkeit verfügt.

Zur Lösung dieses Problems ist bei einem Kraftfahrzeug der eingangs genannten Art erfindungsgemäß vorgesehen, dass die Seitenwände miteinander bewegungsgekoppelt sind.

Die Seitenwände sind zwischen der Vorderwand und der Rückwand des Ablagefachs angeordnet, wobei die Begriffe "Vorderwand" und "Rückwand" in Bezug auf die Fahrtrichtung des Kraftfahrzeugs zu verstehen sind. Eine oder beide Seitenwände sind erfindungsgemäß in der Höhe variabel ausgeführt, also höhenverstellbar. Bei geöffneten Seitenflächen des Ablagefachs, also bei in die abgesenkte Position bewegter Seitenwand oder Seitenwänden, kann ein großes Raumgefühl erzeugt werden, wohingegen bei angehobener Seitenwand oder angehobenen Seitenwänden ein sicherer Transport von im Ablagefach abgelegten Gegenständen ermöglicht wird.

Gegenüber dem Stand der Technik bietet die erfindungsgemäße Lösung den Vorteil, dass eine oder jede Seitenwand des Ablagefachs in beliebiger Höhe individuell verstellbar ist und an die Bedürfnisse der Passagiere hinsichtlich des Raumgefühls angepasst werden kann. Ferner wird ein Herausfallen von Gegenständen aus dem Ablagefach bei angehobener Position der Seitenwand oder der Seitenwände unterbunden.

Das Ablagefach kann mit zwei bewegbaren Seitenwänden oder mit einer bewegbaren und einer unbewegbar in einer bestimmten Höhe befestigten Seitenwand ausgeführt werden.

Um eine gerichtete Bewegung zu ermöglichen, ist vorgesehen, dass eine oder jede bewegbare Seitenwand in an der Vorderwand und der Rückwand vorgesehenen Führungsschienen geführt ist. Die Führungsschienen können als separates Bauteil ausgeführt und an Vorder- und Rückwand befestigt werden oder sie können direkt in die Wand integriert sein, beispielsweise als Nut. Durch die Anordnung und die Form der Führungsschienen wird die Lage der von ihnen geführten Seitenwand in der ausgefahrenen Position vorgegeben, wobei in einer Ausführung mit zwei bewegbaren Seitenwänden diese parallel oder in einem beliebigen Winkel zueinander orientiert sein können.

Für jede Seitenwand ist vorgesehen, dass sie starr oder flexibel ausgeführt sein kann. Eine starre Seitenwand kann dabei beim Öffnen nach unten hin in einen Schacht versenkt werden. Der Schacht kann dabei so ausgeführt sein, dass er die Seitenwand führt, sodass für diese keine weiteren Führungsschienen vorhanden sein müssen.

Jede flexible Seitenwand kann aus einem flexiblen Kunststoffmaterial gefertigt sein und/oder als Jalousie, bestehend aus aneinander beweglich befestigten Lamellen, ausgeführt sein. Eine flexible Seitenwand aus einem Kunststoffmaterial kann dabei einen Rand aufweisen, der es ermöglicht, die flexible Seitenwand in den Führungsschienen zu führen. Bei einer als Jalousie ausgeführten Seitenwand kann diese Funktion von den Lamellen der Jalousie übernommen werden.

Unabhängig davon, wie eine Seitenwand gefertigt oder ausgeführt ist, kann sie entweder bewegbar sein oder unbeweglich in einer gewissen Höhe befestigt sein.

Weiterhin kann das Ablagefach so ausgestaltet werden, dass eine oder jede Seitenwand beim Bewegen in die angehobene Position umlenkbar und über das Ablagefach bewegbar ist. Die Umlenkung erfolgt dabei z. B. über entsprechend geformte Führungsschienen. Abhängig vom Verlauf und der Anordnung der Führungsschienen sind verschiedene Querschnittsformen des geschlossenen Ablagefachs möglich, wie beispielsweise ein Rechteck, ein Halbkreis oder ein Spitzdach. Eine solche Ausgestaltung ermöglicht es, dass das Ablagefach nach oben hin verschlossen wird. Ein solches geschlossenes Ablagefach bietet z. B. einen Sichtschutz auf in seinem Inneren abgelegte Wertsachen. Zusätzlich besteht die Möglichkeit, den Innenraum mit einer Kühlung zu versehen, die es ermöglicht, im Ablagefach befindliche Speisen oder Getränke zu kühlen.

Eine weitere Ausgestaltung der Erfindung sieht vor, dass eine oder jede Seitenwand bei Bewegung in die das Ablagefach seitlich öffnende, abgesenkte Position unter den Fachboden bewegbar und/oder auf einer Rolle aufwickelbar ist. Die flexiblen Seitenwände können gemäß der ersten Alternative so geführt werden, dass sie nach einem seitlichen Umlenken unter dem Fachboden parallel zu diesem angeordnet werden können. Alternativ dazu ist es möglich, die flexiblen Seitenwände auf je eine Rolle aufzuwickeln, wobei sich die Rollen ebenfalls unter dem Fachboden befinden können. Die Führung der Seitenwände unter den Fachboden kann hierbei durch entsprechend geformte Führungsschienen erfolgen.

Der Fachboden, der das Ablagefach nach unten hin begrenzt, kann an seiner Oberseite beispielsweise konkav gekrümmt sein oder andere, den Transport von Gegenständen erleichternde Strukturen aufweisen, wie beispielsweise Becherhalter oder Ähnliches.

Weiterhin kann das Ablagefach hinsichtlich des Öffnens und des Schließens so gestaltet sein, dass eine oder jede Seitenwand manuell oder elektromotorisch bewegbar ist, wobei eine oder jede manuell bewegbare Seitenwand einen Griff aufweist. Dieser Griff kann beispielsweise am oberen Ende in der Fläche der Jalousie angebracht sein. Bei elektromotorischer Bewegung sind Elektromotoren mit entsprechender Steuerung vorgesehen, durch die die Seitenwände bewegt werden können. Ein Auslösen der Bewegung der Seitenwände kann beispielsweise durch einen Schalter, eine Taste oder einen berührungsempfindlichen Bildschirm im Innenraum des Kraftfahrzeugs erfolgen. Weitere Möglichkeiten umfassen die Steuerung der Seitenwandbewegung durch Gesten- und Sprachsteuerung sowie eine beliebige Kombination der genannten Möglichkeiten.

Die Bewegung der Seitenwand oder der Seitenwände kann stufenlos oder in beliebig vielen Stufen erfolgen. Dies ermöglicht es, sie wahlweise in verschiedenen, angehobenen Positionen bzw. Höhen zwischen der Offenstellung und der Schließstellung je nach Bedarf der Fahrzeuginsassen zu fixieren. Eine elektromotorische Bewegung der Seitenwände bietet dabei den Vorteil, dass die Position bzw. die Höhe der Seitenwand beliebig eingestellt werden kann, sodass jede Position mit Hilfe des Elektromotors angefahren und gehalten werden kann. Bei manueller Bewegbarkeit einer oder beider Seitenwände kann eine Arretierung der Seitenwandhöhe in beliebig vielen Stufen beispielsweise durch eine Rastierung erfolgen, die in günstiger Weise im Bereich der Führungsschienen oder an einem der Zahnräder eines der im Folgenden beschriebenen Getriebe erfolgen kann.

Eine Möglichkeit das Öffnen und das Schließen der Seitenwände komfortabel zu gestalten, besteht erfindungsgemäß darin, dass zwei bewegbare Seitenwände miteinander bewegungsgekoppelt sind. Hierbei wird bei der manuellen oder elektromotorischen Bewegung einer Seitenwand die zweite Seitenwand mitbewegt. Je nach Ausgestaltung der Bewegungskopplung ist beispielsweise ein Synchronlauf oder, beispielsweise bei unterschiedlichen Höhen der Seitenwände, ein Lauf mit derartigem Geschwindigkeitsunterschied möglich, dass die Seitenwände simultan die offene oder die geschlossene Position erreichen.

Eine mögliche technische Umsetzung dieser Bewegungskopplung besteht darin, dass die Seitenwände über ein Getriebe miteinander bewegungsgekoppelt sind. Dies ist sowohl bei elektrischer als auch bei manueller Bewegbarkeit der Seitenwände möglich. Weiterhin ist bei einem Vorhandensein von zwei bewegungsgekoppelten Seitenwänden für deren elektrischen Antrieb nur ein Elektromotor notwendig.

Die Bewegungskopplung kann unabhängig davon, ob die Seitenwände manuell oder motorisch bewegbar sind, derart gestaltet werden, dass das Getriebe mit den Seitenwänden verbundene Zahnstangen umfasst, welche über ein oder mehrere Getrieberäder miteinander gekoppelt sind. Durch ein Bewegen der Getrieberäder werden somit ebenso die Zahnstangen bewegt und mit diesen die an ihnen befestigten Seitenwände, welche dadurch beispielsweise beim Öffnen des Fachs parallel unter den Fachboden geführt werden können.

Eine Alternative dazu besteht darin, dass das Getriebe zwei Rollen, auf die die Seitenwände aufwickelbar sind, koppelt und eine Hohlradstufe aufweist. Dabei ist das Getriebe derart gestaltet, dass die gewünschte Bewegungskopplung zwischen den Seitenwänden über eine entsprechende Bewegungskopplung der Rollen erzielt wird. Die Hohlradstufe des Getriebes erfüllt dabei den Zweck, zu vermeiden, dass die Zahnräder an den Rollen stets mit den gleichen Zähnen kämmen. Durch die Hohlradstufe werden alle Zähne der Zahnräder des Getriebes gleichmäßig beansprucht, was eine erhöhte Lebensdauer des Getriebes zur Folge hat.

Das Ablagefach kann derart im Kraftfahrzeug angeordnet werden, dass die Vorderwand und/oder die Rückwand in die Mittelkonsole des Fahrzeugs integriert sind. Alternativ dazu kann das Ablagefach auch im Fußraum vor einer ersten und/oder jeder weiteren Rücksitzbank angebracht werden.

Weitere Vorteile und Einzelheiten der Erfindung ergeben sich aus den im Folgenden beschriebenen Ausführungsbeispielen sowie anhand der Zeichnungen. Es zeigen:
- Fig. 1: eine Innenansicht eines erfindungsgemäßen Kraftfahrzeugs,
- Fig. 2: eine Perspektivansicht eines Ablagefachs mit zwei beweglichen Seitenwänden,
- Fig. 3: eine Perspektivansicht eines Ablagefachs mit zwei bewegbaren Seitenwänden aus einem anderen Blickwinkel,
- Fig. 4: eine perspektivische Detailansicht einer in Vorder- oder Rückwand integrierter Führungsschiene mit abgesenkten Seitenwänden (Fig. 4a), mit Seitenwänden in angehobener Position (Fig. 4b) und mit das Ablagefach nach oben hin verschließenden Seitenwänden (Fig. 4c),
- Fig. 5: ein Schnittbild eines Ablagefachs mit zwei parallel unter dem Fachboden geführten Seitenwänden in angehobener Position (Fig. 5a) und abgesenkter Position (Fig. 5b),
- Fig. 6: eine geschnittene Seitenansicht eines Ablagefachs mit zwei beweglichen Seitenwänden, die auf je einer unter dem Fachboden angeordneten Rolle aufwickelbar sind, in angehobener Position (Fig. 6a) und abgesenkter Position (Fig. 6b),
- Fig. 7: eine perspektivische, geschnittene Ansicht eines Seitenfachs mit bewegungsgekoppelten Seitenwänden,
- Fig. 8: ein zur Bewegungskopplung verwendetes Getriebe mit Hohlradstufe,
- Fig. 9: eine Draufsicht auf zwei mittels eines Getriebe bewegungsgekoppelter und teilweise auf Rollen aufgewickelter Seitenwände, und
- Fig. 10: eine Draufsicht auf zwei mittels Zahnstangen und Getriebe bewegungsgekoppelter Seitenwände.

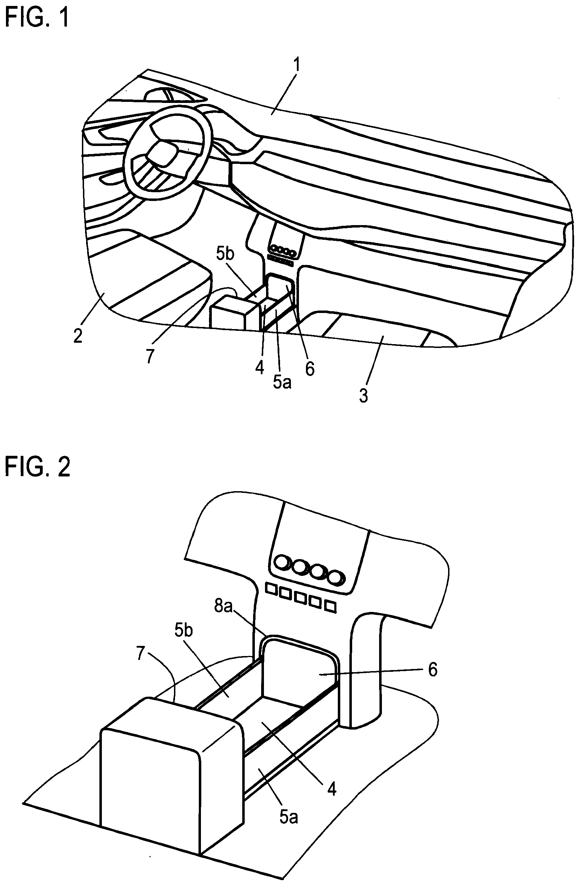

Fig. 1 zeigt den Innenraum eines erfindungsgemäßen Kraftfahrzeugs, in dem im Fußraum vor den Sitzen 2 und 3 das Ablagefach 4 angeordnet ist. Das Ablagefach 4 weist zwei Seitenwände 5a, 5b auf. Die Vorderwand 6 und die Rückwand 7 des Ablagefachs 4 sind in die Mittelkonsole des Kraftfahrzeugs integriert.

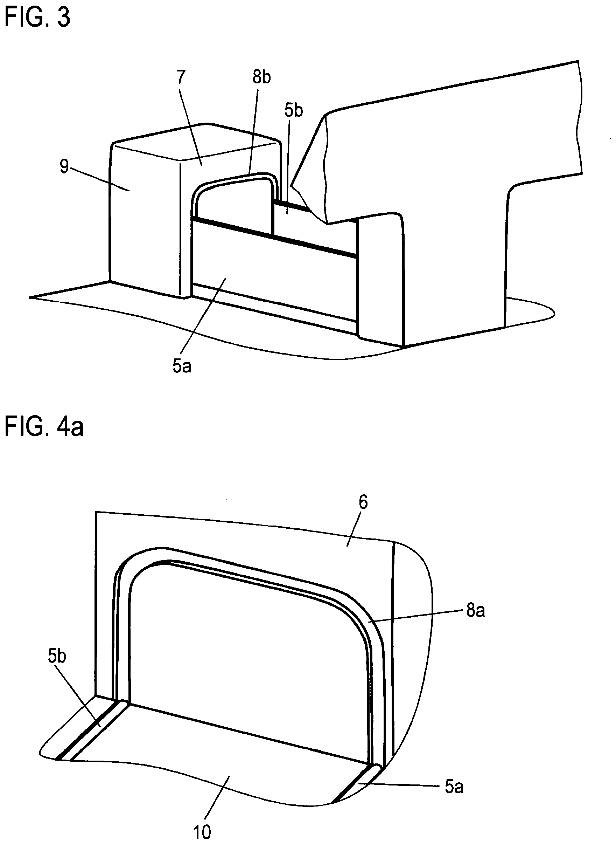

Fig. 2 zeigt eine vergrößerte Darstellung des Ablagefachs 4 aus Fig. 1 mit zwei bewegbaren Seitenwänden 5a, 5b, die zwischen der in die Mittelkonsole integrierten Vorderwand 6 und Rückwand 7 angebracht sind. Die Seitenwände 5a, 5b sind in einer in der Vorderwand 6 integrierten Führungsschiene 8a und der in Fig. 3 dargestellten Führungsschiene 8b, die in Rückwand 7 integriert ist, geführt. Beide Seitenwände 5a, 5b bestehen aus einem flexiblen Material, wie beispielsweise einem 3 mm bis 5 mm dicken Kunststoffmaterial, und befinden sich in einer teilweise angehobenen Position, z.B. in einer Höhe von ca. 15 cm. Die Gesamthöhe des Fachs bei komplett geschlossenen Seitenwänden beträgt in diesem Beispiel ca. 20 cm.

Die in Fig. 3 dargestellte Führungsschiene 8b ist in die Rückwand 7 des Ablagefachs integriert, welche ihrerseits in einen Aufbau der Mittelkonsole 9 integriert ist. Die Führungsschiene 8b ist hierbei genauso geformt wie die Führungsschiene 8a aus Fig. 2. Beide Führungsschienen 8a und 8b sind parallel zueinander an Vorderwand 6 bzw. Rückwand 7 angeordnet.

In Fig. 4a ist der Verlauf der Führungsschiene 8a, welche in die Vorderwand 6 integriert ist, vergrößert dargestellt. Die Seitenwände 5a, 5b befinden sich in abgesenkter Position, sodass ihre oberen Ränder bündig mit den Seiten des Fachbodens 10 abschließen. Die Führungsschiene 8a ist derart geformt, dass die aus einem flexiblen Material bestehenden Seitenwände 5a und 5b über die dargestellte, abgesenkte Position hinaus angehoben werden können. Die Seitenwände 5a, 5b sind dabei derart gestaltet, dass ihre seitlichen Ränder von der Führungsschiene 8a und der nicht dargestellten, auf der gegenüberliegenden Rückwand angebrachten Führungsschiene 8b geführt werden.

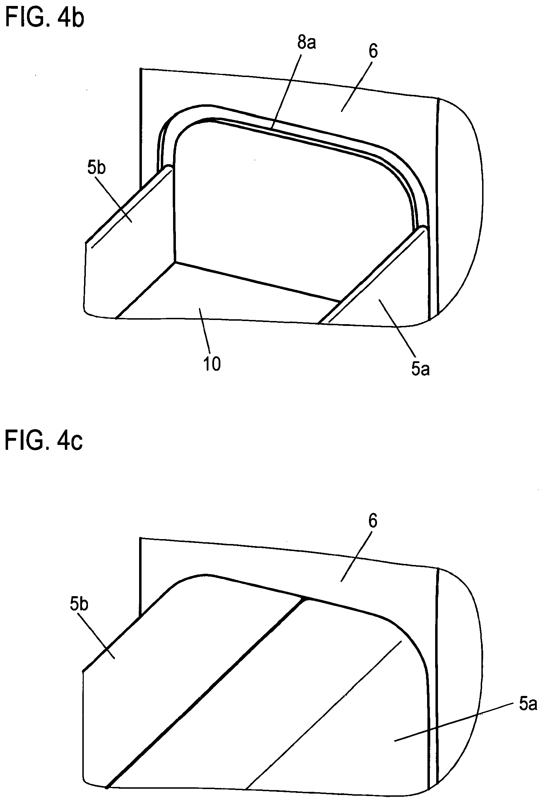

Fig. 4b zeigt die Seitenwände 5a, 5b in einer angehobenen Position. Bei weiterem Anheben der Seitenwände 5a, 5b erfahren diese aufgrund der Form von Führungsschiene 8a eine Umlenkung, sodass sie parallel zum Fachboden 10 geführt werden und das Ablagefach nach oben hin verschließen, so wie es in Fig. 4c dargestellt ist. Abhängig davon, wie die Führungsschiene 8a, bzw. die in den Figuren 4a bis 4c nicht dargestellte Führungsschiene 8b geformt sind, lassen sich verschiedene Querschnittsgeometrien des geschlossenen Ablagefachs realisieren. Zum Beispiel sind neben der gezeigten, im oberen Abschnitt parallel zum Fachboden verlaufenden Geometrie, auch ein halbkreisförmiger oder ein dreieckiger Querschnitt möglich. Weiterhin ist es dabei nicht zwingend erforderlich, dass die Führungsschienen 8a und 8b eine gleiche Geometrie aufweisen.

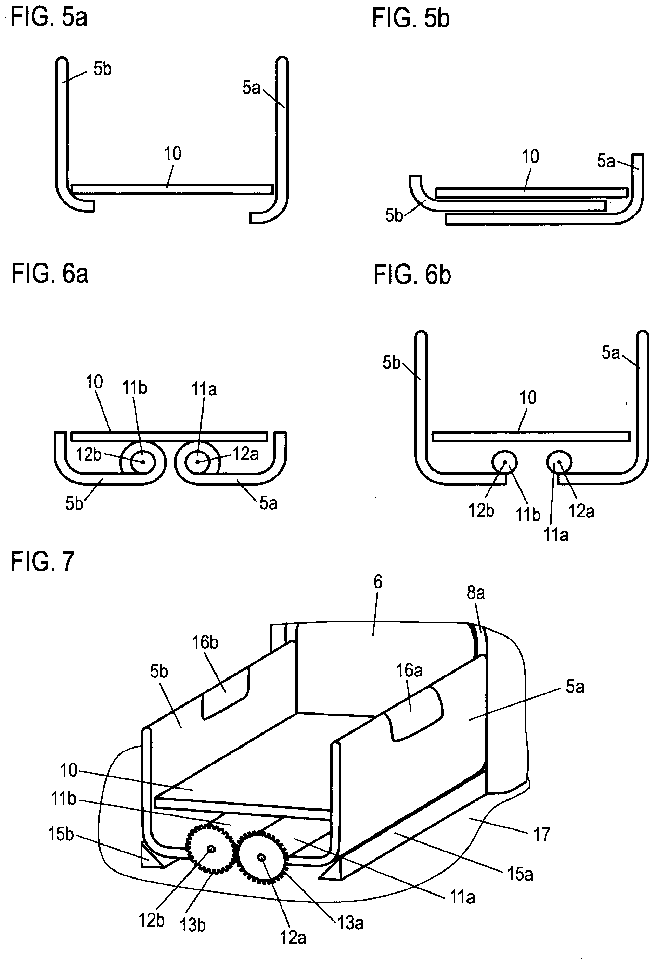

Fig. 5a zeigt eine Prinzipdarstellung, in der die Seitenwände 5a, 5b parallel unter dem Fachboden 10 geführt werden. Die Seitenwände 5a, 5b befinden sich in einer angehobenen Position. Die Vorder- und die Rückwand sowie die Führungsschienen, in denen die Seitenwände 5a, 5b geführt werden, sind nicht dargestellt. Die Seitenwände 5a, 5b sind hierbei beispielsweise aus einem flexiblen Kunststoffmaterial oder als aus verschiedenen Lamellen bestehende Jalousien ausgeführt. Die Führung der Seitenwände 5a, 5b unter den Fachboden 10 sowie seitlich und/oder über das Fach erfolgt durch entsprechend geformte Führungsschienen.

Fig. 5b zeigt eine Prinzipdarstellung gemäß Fig. 5a mit abgesenkten Seitenwänden, die übereinander geführt sind. Bei einer Bewegung der Seitenwände 5a, 5b aus der dargestellten, abgesenkten Position in eine weiter angehobene Position, wie in Fig. 5a dargestellt, verkürzt sich der parallel unter dem Fachboden 10 geführte Abschnitt der Seitenwände 5a, 5b entsprechend.

Fig. 6a zeigt eine Prinzipdarstellung zweier unter den Fachboden 10 geführter, aus einem flexiblen Material oder als Jalousie ausgeführter Seitenwände 5a, 5b in abgesenkter Position, wobei die Seitenwände 5a, 5b hierbei auf zwei Rollen 11a, 11b, die unterhalb des Fachbodens 10 angeordnet sind, aufgewickelt werden. Die Vorder- und die Rückwand sowie die Führungsschienen sind nicht dargestellt. Die Rollen 11a, 11b sind an Achsen 12a bzw. 12b angeordnet bzw. um diese drehbar. Bei manueller Bewegbarkeit der Seitenwände 5a, 5b kann diese Anordnung so gestaltet werden, dass sich die Rollen 11a bzw. 11b um die Achsen 12a bzw. 12b weiter drehen können. Bei elektromotorischer Bewegbarkeit der Seitenwände 5a, 5b können die Rollen 11a, 11b an den Achsen 12a bzw. 12b fest angebracht sein, so dass die Achsen 12a, 12b durch je einen Elektromotor bewegt werden können. Dadurch ist es möglich, die Seitenwände 5a, 5b beispielsweise in die in Fig. 6b dargestellte, angehobene Position zu überführen. Dabei verringert sich der Anteil der Seitenwände 5a, 5b, der auf den Rollen 11a bzw. 11b aufgewickelt ist, entsprechend. Die Führung der Seitenwände erfolgt durch entsprechend geformte, hier nicht dargestellte Führungsschienen.

Fig. 7 zeigt eine perspektivische und geschnittene Ansicht eines Ablagefachs, bei dem die Seitenwände 5a, 5b von einer Führung 8a, die in die Vorderwand 6 integriert ist, geführt werden. Rückwand 7 und die Führungsschiene 8b sind nicht dargestellt. Die Seitenwände 5a, 5b sind auf zwei Rollen 11a, 11b, welche sich unter dem Fachboden 10 befinden, angeordnet. Auch in diesem Beispiel erfolgt die Umlenkung der aus einem flexiblen Material oder als Jalousie ausgeführten Seitenwände 5a bzw. 5b durch entsprechend geformte Führungsschienen. Die Rollen 11a, 11b sind dabei mit den Achsen 12a, 12b fest verbunden. Zusätzlich ist die Achse 12a oder die Rolle 11a mit dem Zahnrad 13a sowie die Achse 12b oder die Rolle 11b mit Zahnrad 13b fest verbunden. Zwischen dem Boden des Fahrzeuginnenraums 17 und den Seitenwänden 5a bzw. 5b sind Blendleisten 15a bzw. 15b angebracht. Durch die Zahnräder 13a, 13b wird eine Bewegungskopplung der beiden Seitenwände 5a, 5b erreicht. Zur manuellen Bewegbarkeit weisen die Seitenwände 5a, 5b die Griffe 16a bzw. 16b auf. Durch die Bewegungskopplung der Rollen 11a, 11b ist es zum Öffnen bzw. Schließen der Seitenwände ausreichend, wenn eine der beiden Seitenwände manuell betätigt wird.

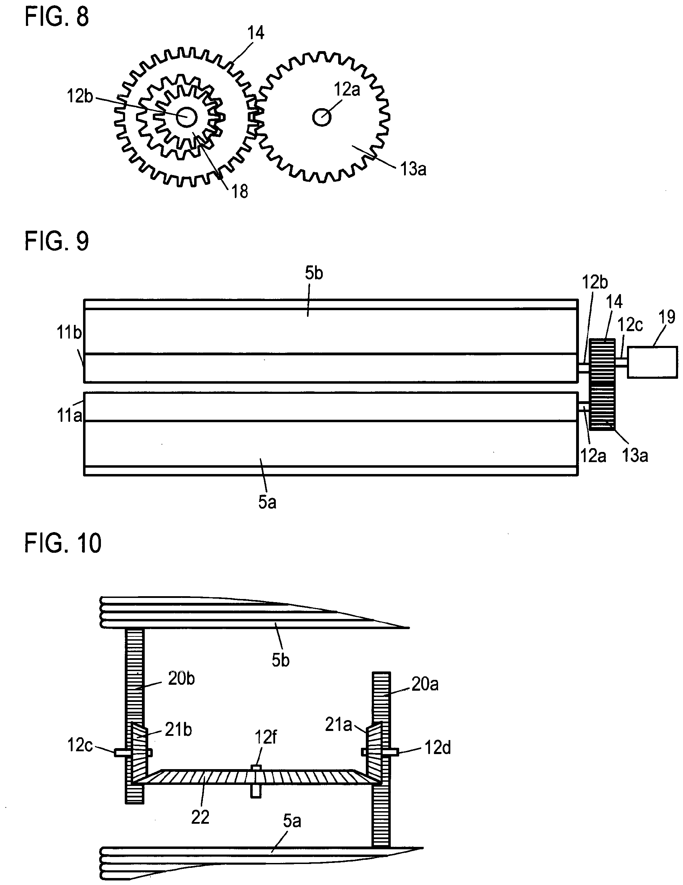

In Fig. 8 ist ein Getriebe zur Bewegungskopplung zweier Seitenwände dargestellt. Es besteht aus dem auf der Achse 12a angeordneten Zahnrad 13a, welches mit dem Hohlrad 14 kämmt. In einer Aussparung des Hohlrads 14 befindet sich das auf der Achse 12b angeordnete Zahnrad 18. Die Zähnezahl der Zahnräder ist dabei so gewählt, dass Folgendes gilt: Die Zähnezahl der Außenverzahnung des Hohlrads 14 steht im gleichen Verhältnis zur Zähnezahl des Zahnrads 13a wie die Zähnezahl der Innenverzahnung des Hohlrades 14 zur Zähnezahl des Zahnrades 18. Dies gewährleistet eine gleichmäßige Beanspruchung aller Zähne der Zahnräder. Die Zahnräder 13a und 18 sowie das Hohlrad 14 können hierbei beispielsweise als aus Kunststoff als Spritzgussteil ausgeführt sein, was eine kostengünstige Herstellung insbesondere des Hohlrades 14 ermöglicht.

Fig. 9 zeigt zwei Seitenwände 5a, 5b, die auf den Rollen 11a, 11b aufgewickelt sind. Der Fachboden und die Seitenwände sind hierbei nicht dargestellt. Eine Bewegungskopplung der beiden Seitenwände 5a und 5b wird über das an der Achse 12a angebrachte Zahnrad 13a und dem in Fig. 8 dargestellten, im Inneren des Hohlrads 14 angeordneten Zahnrad 18, welches an Achse 12b befestigt ist, erzeugt. Das Hohlrad 14 ist hierbei an der Achse 12c befestigt, welche an ihrem anderen Ende durch den Elektromotor 19 antreibbar ist. Diese Anordnung ermöglicht einen synchronen Lauf der Seitenwände 5a, 5b bei Verwendung nur eines Elektromotors 19. Der Elektromotor 19 ist weiterhin an eine Steuereinrichtung (nicht dargestellt) angeschlossen, welche ihrerseits an wenigstens ein Bedienelement angeschlossen ist, über das die Fahrzeuginsassen die Position der Seitenwände 5a, 5b verändern können, um beispielsweise das Ablagefach zu öffnen, zu schließen, oder eine beliebige Höhe der Seitenwände einzustellen.

Fig. 10 zeigt eine Bewegungskopplung der Seitenwände 5a und 5b über die an ihnen befestigten Zahnschienen 20a und 20b. Über die an den Zahnschienen 20a und 20b angreifenden Zahnräder 21a und 21b sowie über das Kegelrad 22 wird eine Bewegungskopplung der Seitenwände 5a und 5b erreicht. Die Kegelräder 21a bzw. 21b können hierbei drehbar an den Achsen 12d bzw. 12e gelagert sein. Das Kegelrad 22 ist um die Achse 12f drehbar. Bei der in der Abbildung gezeigten Anordnung können die als aus aneinander flexibel befestigter Lamellen als Jalousie ausgeführten Seitenwände 5a und 5b manuell bewegt werden. Für eine elektromotorische Bewegbarkeit kann beispielsweise an der Achse 12f ein zusätzlicher Elektromotor angebracht werden.

## Patentansprüche

1. Kraftfahrzeug mit wenigstens zwei Sitzen (2, 3) und einem sich im Fußraum vor den Sitzen befindlichen Ablagefach (4), welches einen Boden (10), eine Vorderwand (6), eine Rückwand (7) und zwei Seitenwände (5a, 5b) umfasst, wobei jede Seitenwand (5a. 5b) zwischen einer das Ablagefach (4) seitlich öffnenden, abgesenkten Position und einer das Ablagefach (4) seitlich schließenden, angehobenen Position bewegbar ist,
**dadurch gekennzeichnet,**
**dass** die Seitenwände (5a, 5b) miteinander bewegungsgekoppelt sind.

2. Kraftfahrzeug nach Anspruch 1,
**dadurch gekennzeichnet,**
**dass** eine oder jede Seitenwand (5a, 5b) in an der Vorderwand (6) und der Rückwand (7) vorgesehenen Führungsschienen (8a, 8b) geführt ist.

3. Kraftfahrzeug nach Anspruch 1 oder 2,
**dadurch gekennzeichnet,**
**dass** jede Seitenwand (5a, 5b) starr oder flexibel ausgeführt ist.

4. Kraftfahrzeug nach Anspruch 3,
**dadurch gekennzeichnet,**
**dass** jede Seitenwand (5a, 5b) aus einem flexiblen Kunststoffmaterial gefertigt ist und/oder als Jalousie, bestehend aus aneinander beweglich befestigten Lamellen, ausgeführt ist.

5. Kraftfahrzeug nach einem der vorangegangenen Ansprüche,
**dadurch gekennzeichnet,**
**dass** eine oder jede Seitenwand (5a, 5b) beim Bewegen in die angehobene Position umlenkbar und über das Ablagefach (4) bewegbar ist.

6. Kraftfahrzeug nach einem der vorangegangenen Ansprüche,
**dadurch gekennzeichnet,**
**dass** eine oder jede Seitenwand (5a, 5b) bei Bewegung in die das Ablagefach (4) seitlich öffnende, abgesenkte Position unter den Fachboden (10) bewegbar und/oder auf einer Rolle (11a, 11b) aufwickelbar ist.

7. Kraftfahrzeug nach einem der vorangegangenen Ansprüche,
**dadurch gekennzeichnet,**
**dass** eine oder jede Seitenwand (5a, 5b) manuell oder elektromotorisch bewegbar ist.

8. Kraftfahrzeug nach einem der vorangegangenen Ansprüche,
**dadurch gekennzeichnet,**
**dass** eine oder jede manuell bewegbare Seitenwand (5a, 5b) einen Griff (16a, 16b) aufweist.

9. Kraftfahrzeug nach einem der vorangehenden Ansprüche,
**dadurch gekennzeichnet,**
**dass** die Seitenwände (5a, 5b) über ein Getriebe miteinander bewegungsgekoppelt sind.

10. Kraftfahrzeug nach Anspruch 9,
**dadurch gekennzeichnet,**
**dass** das Getriebe mit den Seitenwänden (5a, 5b) verbundene Zahnstangen (20a, 20b) umfasst, welche über ein oder mehrere Getrieberäder (21a, 21b) miteinander gekoppelt sind.

11. Kraftfahrzeug nach Anspruch 9 und Anspruch 6,
**dadurch gekennzeichnet,**
**dass** das Getriebe zwei Rollen (11a, 11b), auf die die Seitenwände (5a, 5b) aufwickelbar sind, koppelt und eine Hohlradstufe (14) aufweist.

12. Kraftfahrzeug nach einem der vorangegangenen Ansprüche,
**dadurch gekennzeichnet,**
**dass** die Vorderwand (6) und/oder die Rückwand (7) in die Mittelkonsole des Fahrzeugs integriert sind.

## Claims

1. Motor vehicle comprising at least two seats (2, 3) and, located in the footwell in front of the seats, a storage compartment (4), which has a base (10), a front wall (6), a rear wall (7) and two side walls (5a, 5b), wherein each side wall (5a, 5b) can be moved between a lowered position, laterally opening the storage compartment (4), and a raised position, laterally closing the storage compartment (4),
**characterised in that**
the side walls (5a, 5b) are movably coupled to each other.

2. Motor vehicle according to claim 1,
**characterised in that**
one or each side wall (5a, 5b) is guided within guide rails (8a, 8b) provided on the front wall (6) and the rear wall (7).

3. Motor vehicle according to claim 1 or 2,
**characterised in that**
each side wall (5a, 5b) is either rigid or flexible.

4. Motor vehicle according to claim 3,
**characterised in that**
each side wall (5a, 5b) is made of a flexible plastic material and/or is formed as a blind consisting of slats movably fastened to each other.

5. Motor vehicle according to any one of the previous claims,
**characterised in that**,
upon movement into the raised position, one or each side wall (5a, 5b) can be deflected and can be moved over the storage compartment (4).

6. Motor vehicle according to any one of the previous claims,
**characterised in that**,
upon movement into the lowered position, laterally opening the storage compartment (4), one or each side wall (5a, 5b) can be moved under the compartment base (10) and/or can be wound up on a roller (11a, 11b).

7. Motor vehicle according to any one of the previous claims,
**characterised in that**
one or each side wall (5a, 5b) can be moved manually or electromotively.

8. Motor vehicle according to any one of the previous claims,
**characterised in that**
one or each manually movable side wall (5a, 5b) comprises a handle (16a, 16b).

9. Motor vehicle according to any one of the preceding claims,
**characterised in that**
the side walls (5a, 5b) are movably coupled to each other by way of a gear mechanism.

10. Motor vehicle according to claim 9,
**characterised in that**
the gear mechanism has toothed racks (20a, 20b) connected to the side walls (5a, 5b), said toothed racks being coupled together via one or more gear wheels (21a, 21 b).

11. Motor vehicle according to claim 9 and claim 6,
**characterised in that**
the gear mechanism couples two rollers (11a, 11b), onto which the side walls (5a, 5b) can be wound, and comprises a ring-gear stage (14).

12. Motor vehicle according to any one of the previous claims,
**characterised in that**
the front wall (6) and/or the rear wall (7) are integrated into the centre console of the vehicle.

## Revendications

1. Véhicule automobile comportant au moins deux sièges (2, 3) et un compartiment de rangement (4) situé dans l'espace pour les pieds devant les sièges, qui comprend un fond (10), une paroi avant (6), une paroi arrière (7) et deux parois latérales (5a, 5b), dans lequel chaque paroi latérale (5a, 5b) peut être déplacée entre une position abaissée dans laquelle le compartiment de rangement (4) est ouvert latéralement et une position relevée dans laquelle le compartiment de rangement (4) est fermé latéralement,
**caractérisé en ce que**
les parois latérales (5a, 5b) sont couplées entre elles par mouvement.

2. Véhicule automobile selon la revendication 1,
**caractérisé en ce que**
une ou chaque paroi latérale (5a, 5b) est guidée dans des rails de guidage (8a, 8b) prévus sur la paroi avant (6) et la paroi arrière (7).

3. Véhicule automobile selon la revendication 1 ou 2,
**caractérisé en ce que**
chaque paroi latérale (5a, 5b) est conçue rigide ou flexible.

4. Véhicule automobile selon la revendication 3,
**caractérisé en ce que**
chaque paroi latérale (5a, 5b) est constituée d'un matériau plastique souple et/ou est conçue en tant que store constitué de lamelles fixées de manière mobile les unes aux autres.

5. Véhicule automobile selon l'une quelconque des revendications précédentes,
**caractérisé en ce que**
une ou chaque paroi latérale (5a, 5b) peut être déviée et déplacée au-dessus du compartiment de rangement (4) lorsqu'elle est déplacée en position relevée.

6. Véhicule automobile selon l'une quelconque des revendications précédentes,
**caractérisé en ce que**
une ou chaque paroi latérale (5a, 5b) peut être déplacée sous le fond (10) et/ou enroulée sur un rouleau (11a, 11b) lorsqu'elle est déplacée en position abaissée dans laquelle le compartiment de rangement (4) est ouvert latéralement.

7. Véhicule automobile selon l'une quelconque des revendications précédentes,
**caractérisé en ce que**
une ou chaque paroi latérale (5a, 5b) peut être déplacée manuellement ou par moteur électrique.

8. Véhicule automobile selon l'une quelconque des revendications précédentes,
**caractérisé en ce que**
une ou chaque paroi latérale pouvant être déplacée manuellement (5a, 5b) présente une poignée (16a, 16b).

9. Véhicule automobile selon l'une quelconque des revendications précédentes,
**caractérisé en ce que**
les parois latérales (5a, 5b) sont couplées entre elles par mouvement par l'intermédiaire d'une transmission.

10. Véhicule automobile selon la revendication 9,
**caractérisé en ce que**
la transmission comprend des crémaillères (20a, 20b) qui sont reliées aux parois latérales (5a, 5b) et sont couplées entre elles par une ou plusieurs roues de transmission (21a, 21b).

11. Véhicule automobile selon la revendication 9 et la revendication 6,
**caractérisé en ce que**
la transmission accouple deux rouleaux (11a, 11b) sur lesquels les parois latérales (5a, 5b) peuvent être enroulées et présente un étage de roue intérieure (14).

12. Véhicule automobile selon l'une quelconque des revendications précédentes,
**caractérisé en ce que**
la paroi avant (6) et/ou la paroi arrière (7) sont intégrées dans la console centrale du véhicule.
